# EUROPEAN PATENT APPLICATION

(11) **EP 0 997 222 A1**
(43) Date of publication of application: **03.05.2000**
(21) Application number: 99922685.5
(22) Date of filing: 05.05.1999
(51) Int. Cl.: B23K 1/00

(54) **DEVICE FOR THE LASER PROCESSING OF MATERIALS**

(30) Priority: 15.05.1998 RU 98108997
(71) Applicant: Nauchno-Proizvodstvennaya Firma "MGM", Moscow, 124471 (RU); Obshestvo S Organichennoi Otvetstvennostiju " Termoluch", Moskow (RU); Saltykov, Boris Petrovich, Moskow, 113208 (RU); Apel, Klaus, 15366 Birkenstein (DE); Mala, Ladislav, Praha 5 (CZ); Votoupal, Petr, Praha 2 (CZ)
(72) Inventor: ALEXEEV, Georgy Mikhailovich, Moscow, 109432 (RU); BORISOV, Mikhail Timofeevich, Moscow, 119435 (RU); GUSEV, Eduard Borisovich, Moscow, 119261 (RU)
(74) Representative: Sparing - Röhl - Henseler Patentanwälte
(86) International application number: RU9900151
(87) International publication number: WO9959758

(57) **Abstract**

Use: Welding, soldering, cutting and other forms of thermal processing with light and laser beams.

Essence of the invention: A device for laser processing comprises a source of laser radiation and a source for preliminary heating consisting of an ellipsoidal reflector with electrodes mounted in the radiation focus thereof, a light guide, a focusing system, one end of the light guide is connected to the source of laser radiation, the other to the optical focusing system. The reflector is made with an insert having an inlet aperture for passage of the laser beam, the optical focusing system is positioned in the aperture of the annular insert with the possibility of making the optical axis of the light guide coincide with the optical axis of the optical focusing system which passes between the electrodes. The insert may be made with an ellipsoidal or parabolic reflecting surface. The optical focusing system may be positioned at the end face of the reflector outside the aperture angle.

## Description

The invention relates to the field of light-laser processing, in particular to a device for welding, soldering and cutting with light and laser beams. The instant invention may be used for welding metals and for other types of thermal processing.

A device is known for laser welding of materials, including a source of laser radiation and a source for preliminary heating [1].

Such a device makes it possible to conduct preliminary heating, wherewith the non-uniformity of heating over the surface and through the volume of the body being heated is reduced, higher temperatures to which the bodies are heated are achieved.

A device for light-laser processing is known which has the purpose of forming a heating spot of very small size with a high density of radiation energy, in particular for welding metals and alloys. It comprises a source of laser radiation with an optical focusing system and a source for preliminarily beating the material being processed that consists of an ellipsoidal reflector with electrodes mounted in the radiation focus zone thereof [2].

In accordance with the invention the device makes it possible to ensure very exact displacement of the two sources of radiation without disturbing the mutual positioning of their optical axes, especially when processing large-size articles when movement of the device is required.

The device according to the invention, comprising a source of laser radiation with an optical focusing system and a source for preliminarily heating the material being processed that consists of an ellipsoidal reflector with electrodes mounted in the radiation focus zone thereof, the reflector having an annular insert with an inlet aperture for passage of a laser beam, wherein the device is provided with a light guide, the optical focusing system is mounted in the annular insert with the possibility for the optical axis of the light guide to coincide with the optical axis of the optical focusing system that passes between the electrodes, one end of the light guide is connected to the source of laser radiation, the other to the optical focusing system.

The annular insert may be made with an ellipsoidal or parabolic reflecting surface.

In accordance with the invention, the device for laser processing of materials, comprising a source of laser radiation with an optical focusing system and a source for preliminarily heating a surface of the material being processed that is provided with an ellipsoidal reflector and with electrodes mounted in the radiation focus thereof, wherein the device is provided with a light guide, the focusing optical system is mounted at the end face of the reflector outside the aperture angle, wherein one end of the light guide is connected to the source of laser radiation, the other to the optical focusing system.

Providing the device for laser processing of materials with the light guide makes it possible to reduce the size of the device and thus ensure displacement of the construction relative to a stationarily positioned material to be processed without disturbance of the mutual positioning of the optical axes of the radiation sources. The optical focusing system provides the possibility for most exactly superposing the light and laser beams in the working focus and thus increase the efficiency of the device.

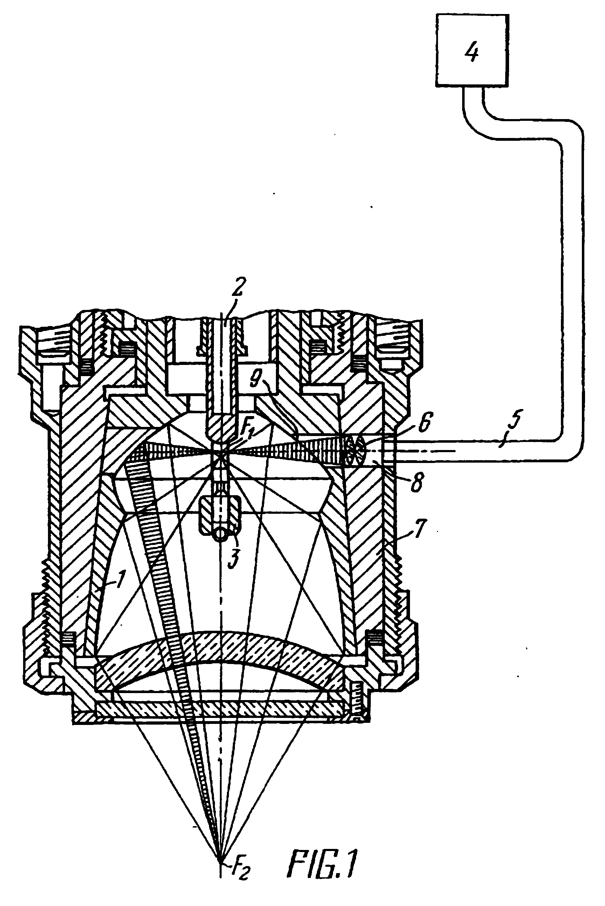

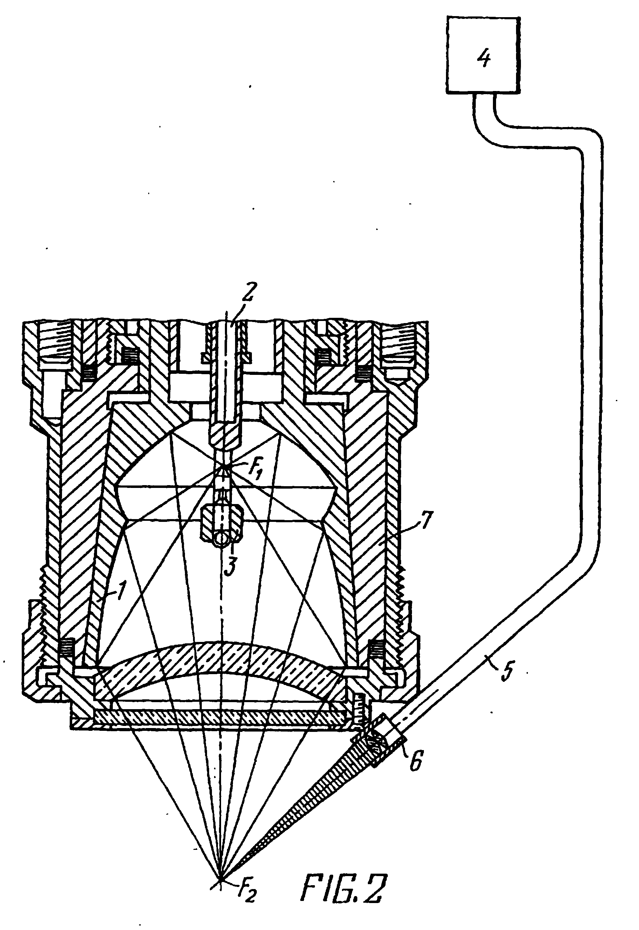

The device for laser processing of materials is illustrated by drawings, where Fig. 1 shows a device with the focusing system positioned opposite the radiation focus, and Fig. 2 shows a device with the focusing system positioned at the end face of the reflector outside the aperture angle.

The device for laser processing of materials in accordance with the invention comprises an ellipsoidal reflector 1, inside which electrodes 2 and 3 are positioned in the radiation focus zone. A source of laser radiation 4 is positioned outside the reflector 1. The device comprises a light guide 5 and a focusing system 6. One end of the light guide 5 is connected to the source of laser radiation 4, the other to the focusing system 6.

In order to place the focusing system 6, an aperture is made in a housing 7 and the reflector 1, an annular insert 8 is mounted in the aperture and the focusing system 6 is placed therein. The optical axis of the light guide 5 is set with the possibility of coinciding with the optical axis of the focusing system 6. The annular insert 8 may be made with an ellipsoidal or parabolic reflecting surface.

In another embodiment of the device for laser processing of materials, the optical focusing system 6 is placed at the end face of the reflector 1 outside the aperture angle thereof.

The device for laser processing of materials works in the following manner.

An article to be processed is put in the working focus of the reflector 1, the power supply is turned on, an arc is excited between the electrodes 2 and 3, laser 4 generation is excited, and they are brought to the working mode. Laser 4 radiation passes through the light guide 5, the focusing system 6 positioned in the aperture of the annular insert 8, intersects the optical axis of the reflector 1 and, reflecting from the walls of the reflector 1, is focused in the working focus of the reflector 1. The reflected beams of the two radiation sources are summated at this point, and they form a heating spot of high density on the article being processed.

In another embodiment of the device, the focusing system 6 is positioned beyond the end face of the reflector 1 and outside its aperture angle. In this case the laser beam gets into the working focus of the reflector immediately. During the process of processing the materials, movement of the heating spot into any necessary point is ensured over a spatial path by means of the light guide 5.

The device for laser processing of materials, in accordance with the invention, makes it possible to summate the reflected beams of the two radiation sources and to form a heating spot of high density on the material to be processed. When the light and laser beams are joined in one working focus, at first preliminary heating of the material being processed is ensured by the light beam, and then the laser beam makes it possible to carry out concentrated speedy heating and deep fusion.

The device has reduced size and may be placed in any spatial position relative to the material being processed without disturbance of the mutual positioning of the optical axes of the two laser and light sources.

Sources of information, taken into account during compilation of the application:
1. DE Application No. OS 3600452, B 23 K 28/02, 1986;
2. RF patent No. 2067040, class B 23 K 1/005 of 27 September 1994.

## Claims

1. A device for laser processing of materials, comprising a source of laser radiation with an optical focusing system and a source for preliminarily heating a surface of material being processed that consists of an ellipsoidal reflector with electrodes mounted in the radiation focus zone thereof, characterized in that the device is provided with a light guide, one end of which is connected to the source of laser radiation, the other to the optical focusing system.

2. A device according to claim 1, characterized in that the reflector is made with an insert having an inlet aperture for passage of a laser beam, the focusing system is positioned in the aperture of the annular insert with the possibility for the optical axis of the light guide to coincide with the optical axis of the optical focusing system that passes between the electrodes.

3. A device according to claim 2, characterized in that the annular insert is made with an ellipsoidal reflecting surface.

4. A device according to claim 2, characterized in that the annular insert is made with a parabolic reflecting surface.

5. A device according to claim 1, characterized in that the focussing system is positioned at the end face of the reflector outside the aperture angle.
